# EUROPÄISCHE PATENTSCHRIFT

(11) **EP 2 976 173 B1**
(45) Veröffentlichungstag und Bekanntmachung des Hinweises auf die Patenterteilung: **28.11.2018**
(21) Anmeldenummer: 14711529.9
(22) Anmeldetag: 21.03.2014
(51) Int. Cl.: B23B 51/06

(54) **MEHRSCHNEIDIGES BOHRWERKZEUG MIT INNENLIEGENDEN KÜHLKANÄLEN**
MULTI-LIP DRILLING TOOL HAVING INTERNAL COOLING DUCTS
OUTIL DE PERÇAGE MULTI-TAILLANTS À CONDUITS DE REFROIDISSEMENT INTÉRIEURS

(30) Priorität: 21.03.2013 DE 102013205056
(43) Veröffentlichungstag der Anmeldung: 27.01.2016
(73) Patentinhaber: Gühring KG, 72458 Albstadt (DE)
(72) Erfinder: RIESTER, Christine, 72488 Sigmaringen (DE)
(74) Vertreter: Winter, Brandl, Fürniss, Hübner, Röss, Kaiser, Polte - Partnerschaft mbB
(86) Internationale Anmeldenummer: PCT/EP2014/055739
(87) Internationale Veröffentlichungsnummer: WO 2014/147240

(56) Entgegenhaltungen:
- EP-A1- 2 444 185
- WO-A1-2011/132686
- DE-A1-102009 024 256
- JP-A- S63 216 611

## Beschreibung

Die Erfindung betrifft ein mehrschneidiges Bohrwerkzeug mit innenliegenden Kühlkanälen, gemäß dem Oberbegriff des Patentanspruchs 1. Ein solches Bohrwerkzeug ist aus EP 2 444 185 A1 bekannt.

Ein derartiges Bohrwerkzeug ist weiter beispielsweise in der WO 2004/056519 A2 beschrieben. Im Einzelnen ist es aus diesem Dokument bekannt, eine Kühlkanalgeometrie in der Weise zu optimieren, dass ein möglichst guter Kompromiss zwischen Kühlmitteldurchsatz, Bruch-, Druck-, Torsions- und Biegefestigkeit des Werkzeugs erzielbar ist.

Die bei einem gattungsbildenden Werkzeug gemäß WO 2004/056519 A2 verwendeten Querschnitte für die innenliegenden Kühlkanäle können ebenso wie die Querschnittsformen gemäß DE 199 42 966 A1, DE 36 29 035 A1, oder CH 26 52 62 in der Weise charakterisiert werden, dass sie von einer Umrisslinie begrenzt sind, die durchgängig gleichsinnig konvex ist.

Im Zuge der Weiterentwicklung der gattungsbildenden Bohrwerkzeuge hin zu Hochleistungswerkzeugen, für die zwischenzeitlich der Hersteller für die gesamte Lebensdauer, das heißt für den gesamten geforderten Zerspanungsweg eine Maßhaltigkeits- und Oberflächengüte-Garantie abgeben muss, ist es erforderlich, das Werkzeug an allen entscheidenden, das heißt hinsichtlich thermischer und mechanischer Beanspruchung neuralgischen Punkten weitgehend zu entlasten. Dies betrifft zum einen die im Eingriff befindlichen Schneiden, aber auch andere Bereiche des Werkzeugs, die bei der Zerspanung einem besonderen Verschleiß bzw. einer besonderen mechanischen oder thermischen Beanspruchung ausgesetzt sind.

Es ist deshalb Aufgabe der vorliegenden Erfindung, ein mehrschneidiges Bohrwerkzeug, insbesondere ein mehrschneidiges Bohrwerkzeug zum Bohren ins Volle, bereitzustellen, bei dem die Gefahr örtlicher thermischer und mechanischer Überbeanspruchungen weiter herabgesetzt ist.

Diese Aufgabe wird durch die Merkmale des Patentanspruchs 1 gelöst.

Langjährige und umfangreiche Versuche der Anmelderin mit Kühlkanal-Querschnittskonturen unterschiedlichster Art haben ergeben, dass ein Kühlkanalquerschnitt mit den Charakteristika des Patentanspruchs 1 allen herkömmlichen Querschnittsformen von Kühlkanalquerschnitten weit überlegen ist, und zwar sowohl was die Verteilung der Spannungen im Bohrer als auch die thermische Belastung der kritischen Bohrwerkzeugbereiche anbelangt. Es hat sich insbesondere gezeigt, dass die erfindungsgemäße Querschnittsform Zugspannungsspitzen im Spannut-Grund minimiert und dabei gleichzeitig dafür sorgt, dass eine bislang nicht erreichbare Kühl-/Schmiermittelmenge an die im Eingriff befindliche Hauptschneide samt Ausspitzung bzw. an die dort entstehenden Späne gelangt. Dies wird in erster Linie dadurch sichergestellt, dass eine Querschnittsform ähnlich einer unsymmetrischen Niere gewählt wird, bei der sichergestellt ist, dass aufgrund der gewählten Krümmungsradien der einzelnen Begrenzungskurvenabschnitte möglichst viel Kühl-/Schmiermittel auf schnellstem Weg über die Ausspitzung und deren Verschneidungskanten mit dem Bohrerkern zur Hauptschneide bzw. in deren Nähe gelangt. Das von den Höchstspannungen beaufschlagte Werkzeugvolumen wird dadurch minimiert, dass ein Querschnittskonturabschnitt mit einer konkaven Kurve vorgesehen wird, der hinter der Hauptschneide liegt. Auf diese Weise gelingt es, hinter der Hauptschneide mehr Material zu konzentrieren, als die mit herkömmlichen Konstruktionen bzw. Ausgestaltungen der innenliegenden Kühlkanäle möglich war. Damit eignet sich die erfindungsgemäße Geometrie der innenliegenden Kühlkanäle in besonderem Maße für Werkzeuge, die auch hochfestem Material bestehen, wie zum Beispiel aus Hartmetall (Vollhartmetall VHM) oder aus einem Cermet-Werkstoff. Denn diese Werkstoffe haben im Vergleich zu anderen duktileren Werkstoffen eine geringere Schlag- und Dauerbiegewechselfestigkeit.

Vorteilhafte Weiterbildungen sind Gegenstand der Unteransprüche.

Mit der Weiterbildung des Anspruchs 3 wird die unsymmetrische Nierenform des Querschnitts noch ausgeprägter, mit dem Effekt, dass die Spannungsspitzen im Spannutengrund auf einen noch weiter eingeschränkten Bereich zurückgedrängt werden. Dabei kommt hinzu, dass aufgrund des konkaven Kurvenabschnitts der Querschnittskontur die Wandstärke des Bohrerstegs zwischen Hauptschneide und innenliegendem Kühlkanal wirksam vergrößert werden kann.

Aufgrund einer vorteilhaften Gestaltung des Querschnitts des innenliegenden Kühlkanals gelingt es, den erforderlichen Zentriwinkel, über den sich der Kühlkanal im Bohrersteg erstreckt, auf einen relativ engen Bereich zwischen 30 und 40° zu beschränken, ohne in Kauf nehmen zu müssen, dass eine Minderversorgung der Bohrerspitze mit Kühl-/Schmiermittel erfolgt.

Es hat sich gezeigt, dass es insbesondere dann, wenn eine Kühl-/Schmiermittelversorgung nach der MMS-Technologie (Minimalmengenschmierung) mit Kühl-/Schmiermittelversorgungsdrücken im gängigen Bereich zwischen 20 und 60 bar zur Anwendung kommt, ohne weiteres genügt, wenn sich der Kühlkanal im Bohrersteg in radialer Richtung über einen Bereich gemäß Anspruch 5 erstreckt, was der Festigkeit des Werkzeugs weiter zugute kommt.

Die in den Ansprüchen angegebenen Werte für die Gestaltung der einzelnen Konturabschnitte der Kühlkanaleinhüllenden können in der Regel noch im Hinblick darauf optimiert werden, wie im Einzelfall die Ausspitzung des Bohrerkerns ausgebildet und/oder dimensioniert wird. Dementsprechend werden für die geometrischen Parameter zur Umschreibung des Kühlkanalquerschnitts Bereiche angegeben, im Rahmen derer der Durchschnittsfachmann eine Optimierung der durch den Anspruch 1 qualitativ vorgegebenen Querschnittskontur vornehmen kann.

Nachstehend werden anhand schematischer Zeichnungen Ausführungsbeispiel der Erfindung näher erläutert. Es zeigen:
Fig. 1 in vergrößertem Maßstab einen Schnitt durch ein zweischneidiges Bohrwerkzeug mit innenliegenden Kühlkanälen zur Erläuterung der Form und Lage der erfindungsgemäßen Kühlkanal-Querschnittskontur;
Fig. 2 eine schematische Darstellung zur Erläuterung der Dimensionierung und Ausrichtung der innenliegenden Kühlkanäle in einem Vollhartmetall (VHM)- Bohrwerkzeug;
Fig. 3 eine Stirnansicht eines mehrschneidigen Bohrwerkzeugs, das mit innenliegenden Kühlkanälen mit erfindungsgemäßer Geometrie und einem Spitzenanschliff in der Ausgestaltung als 4-Flächen-Anschliff ausgestattet ist; und
Fig. 4 eine perspektivische Darstellung der Spitze eines erfindungsgemäßen mehrschneidigen Bohrwerkzeugs zur Verdeutlichung der Kühl-/Schmiermittel-Massenströme und -Geschwindigkeiten im Bereich der Bohrerspitze.

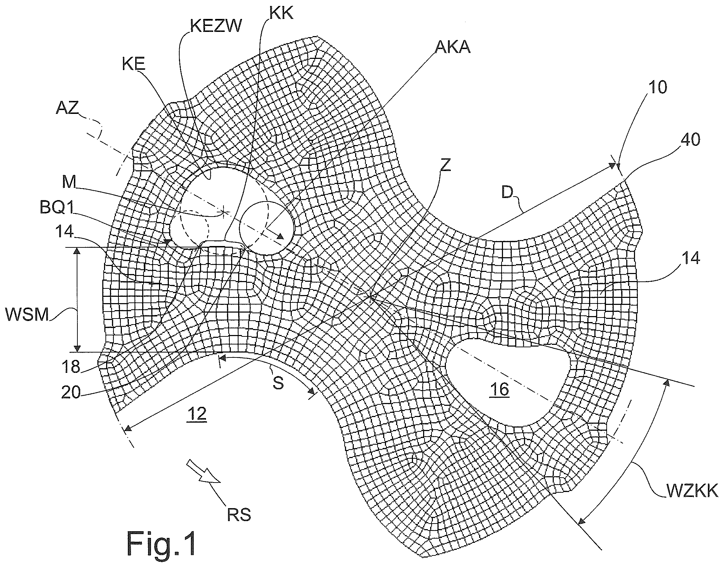

Fig. 1 zeigt den Querschnitt eines zweischneidigen Bohrwerkzeugs 10 mit Spannuten 12 und Bohrerstegen 14. Bei dem Bohrwerkzeug 10 kann es sich um ein gerade genutetes oder wendelförmig genutetes Bohrwerkzeug handeln.

In den Bohrerstegen 14 liegen innenliegende Kühlkanäle 16 mit besonderem Querschnitt, der weiter unten näher beschrieben wird. Diese innenliegenden Kühlkanäle werden in den Bohrerkörper durch ein Urformverfahren eingebracht, nämlich zum Beispiel in einem Strangpressverfahren, wie es in der DE 42 42 336 A1 beschrieben wird. Gemäß diesem Verfahren können wirtschaftlich Rohlinge für Vollhartmetall-Bohrwerkzeuge mit innenliegenden Kühlkanälen hergestellt werden, wobei die Querschnittsform dieser Kühlkanäle dadurch gewählt wird, dass ein entsprechender Querschnitt des an einem Düsendorn gehaltenen Stifts Anwendung findet. Die Offenbarung der DE 42 42 336 A1 wird hinsichtlich des Herstellungsverfahrens ausdrücklich in die vorliegende Anmeldung einbezogen. Es ist allerdings gleichermaßen möglich, die erfindungsgemäße Querschnittskontur durch ein anderes Verfahren herzustellen, wie es zum Beispiel in der US-PS 2 422 994, der DE-PS 36 01 385, der EP 0 465 946 A1 oder der EP 0 431 681 A2 beschrieben ist.

Die Querschnittskontur der innenliegenden Kühlkanäle 16 zeichnet sich durch folgende Charakteristika aus:
Die Querschnittskontur hat grundsätzlich die Querschnittsform einer unsymmetrischen Niere. Ein in den Kühlkanalquerschnitt im Wesentlichen voll eingeschriebener größter Kreis KE überlappt mit der Mitte der Bohrerstege 14. Dies ergibt sich gemäß Fig. 1 dadurch, dass die Zentrumsachse AZ (siehe Bohrwerkzeugzentrum Z), die im Wesentlichen durch die Mitte der Bohrerstege 14 verläuft, auch durch die Mitte des eingeschriebenen größten Kreises KE geht.

Darüber hinaus begrenzt dieser eingeschriebene größte Kreis KE die Kontur des Kühlkanalquerschnitts über einen Zentriwinkel WZKE im Bereicht zwischen 80 und 90° in einem radial außen liegenden und der Drehrichtung RS (siehe Fig. 1) abgewandten Bereicht. Der entsprechende Konturabschnitt ist mit KEZW bezeichnet.

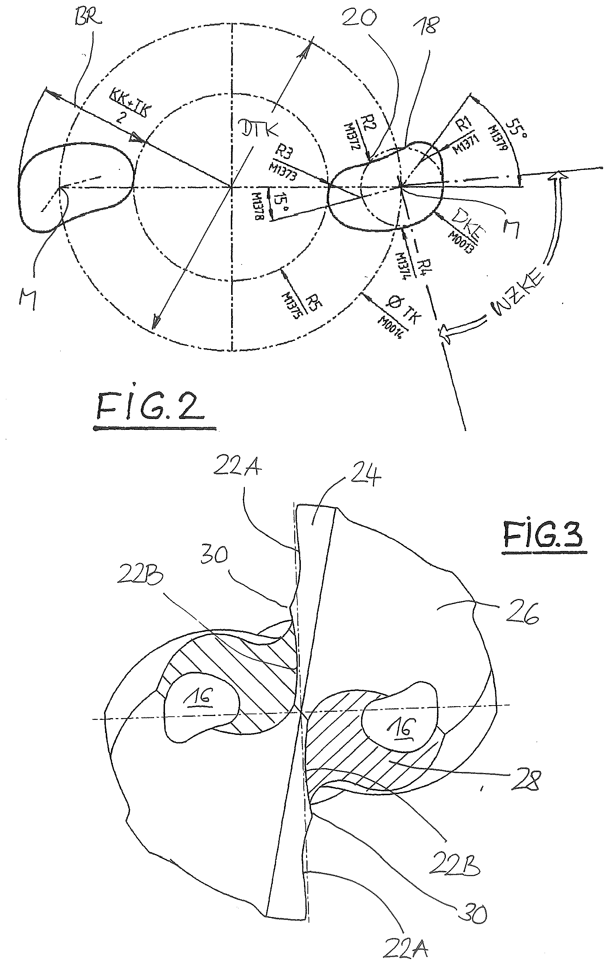

Radial außen liegend und in Schnittrichtung schließt sich an die vom eingeschriebenen Kreis KE festgelegte Begrenzungskurve KEZW im Wesentlichen in Umfangsrichtung ein Querschnittskonturabschnitt BQ1 an, der einen im Vergleich zum eingeschriebenen Kreis KE gleichsinnigen, aber erheblich kleineren Krümmungsradius R1 hat (siehe Fig. 2).

Dieser kleinere Krümmungsradius R1 des Querschnittskonturabschnitts BQ1 gehtwie aus der Fig. 1 und Fig. 2 ersichtlich - in eine konkave Kurve KK mit einem Krümmungsradius R2 (siehe Fig. 2) über, der um ein Vielfaches größer ist als die Krümmung des eingeschriebenen größten Kreises KE.

An die konkave Kurve KK schließt sich auf der anderen Seite, das heißt radial innenliegend und außerhalb des eingeschriebenen größten Kreises KK (siehe Fig. 1 und 2) ein erneut konvexer Kanal-Ausbauchungsabschnitt AKA mit einem Krümmungsradius R3 (siehe Fig. 2) an, der wesentlich größer ist als der kleine Krümmungsradius R1 im Querschnittskonturabschnitt BQ1. Schließlich nimmt - wie den Fign. 1 und 2 entnehmbar ist, die Krümmung der Querschnittsbegrenzung vom Ausbauchungsabschnitt AKA bis zum Bereich KEZW ständig zu.

Weiterhin ist den Fign. 1 und 2 entnehmbar, dass bei der gezeigten Ausführungsform der in den Kühlkanalquerschnitt im Wesentlichen eingeschriebene größte Kreis KE im Wesentlichen mittig in den Bohrerstegen 14 liegt. Diese Ausgestaltung ist allerdings nicht obligatorisch. Es liegt auf der Hand, dass je nach Ausgestaltung des Spitzenanschliffs, insbesondere in Abhängigkeit von der Form, Größe, Lage und Ausdehnung einer Ausspitzung im Bohrer-Schneidbereich auch eine Verschiebung der innenliegenden Kühlkanäle in Umfangsrichtung möglich ist. In jedem Fall sollte allerdings der in dem Kühlkanalquerschnitt im Wesentlichen eingeschriebene größte Kreis KE mit der Mitte der Bohrerstege 14 überlappen.

Wie sich aus den Fign. 1 und 2 ferner ergibt, schneidet der in dem Kühlkanalquerschnitt im Wesentlichen eingeschriebene größte Kreis KE die konkave Kurve KK an zwei Punkten 18 und 20. Auf diese Weise ergibt sich - wie am besten der Fig. 1 entnehmbar ist - zwischen Spannut bzw. Hauptschneide und innenliegendem Kühlkanal 16 eine Mindestwandstärke WSM, die im Vergleich zu herkömmlichen Kühlkanalquerschnittsgeometrien erheblich vergrößert ist. Dies hat den positiven Effekt, dass derjenige Abschnitt S (siehe Fig. 1), der bei der Torsionsbeanspruchung des Bohrwerkzeugs einer erhöhten Zugspannung unterworfen ist, im Vergleich zum Stand der Technik eingeschränkt werden kann.

In Fig. 1 ist mit der Bezeichnung WZKK ein Zentriwinkel bezeichnet, über dem sich der Kühlkanal 16 erstreckt. Vorzugsweise liegt dieser Zentriwinkel WZKK zwischen 30 und 40°.

Wie sich aus der Fig. 2 ergibt, erstreckt sich der Kühlkanal 16 im Bohrersteg in radialer Richtung über einen Bereich BR, der im Bereich zwischen 0,15 und 0,2 x D liegt, wobei D den Nenndurchmesser des Bohrwerkzeugs bezeichnet.

Der Mittelpunkt M des größten eingeschriebenen Kreises KE liegt auf einem Teilkreis mit einem Durchmesser DTK (siehe Fig. 2) der im Bereich von 0,5 x D liegt.

In Fig. 2 ist mit DKE der Durchmesser des eingeschriebenen größten Kreises KE bezeichnet. Dieser liegt vorzugsweise im Bereich zwischen 0,1 und 0,15 x D.

Der kleinere Krümmungsradius R1 (siehe Fig. 2) des Querschnittskonturabschnitts BQ1 hat einen Wert, der im Wesentlichen dem 0,25-fachen des Durchmessers DKE des eingeschriebenen größten Kreise KE entspricht.

Der Krümmungsradius R2 der konkaven Kurve KK (siehe Fig. 2) entspricht im Wesentlichen dem zweifachen Wert des Durchmessers DKE des eingeschriebenen größten Kreises KE.

Der Krümmungsradius R3 des konvexen Kanal-Ausbauchungsabschnitts AKA entspricht im Wesentlichen dem 1,5-fachen des kleinen Krümmungsradius R1 im Querschnittskonturabschnitt BQ1.

Mit dieser anhand der Fign. 1 und 2 geometrisch umrissenen Kontur des Querschnitts des innenliegenden Kühlkanals 16 ergibt sich der Effekt, dass bei vorgegebenem Durchsatzvolumen an Kühl-/Schmiermittel durch die innenliegenden Kühlkanäle ein Höchstmaß an Schneidenkühlung bei gleichzeitiger Minimierung des auf Zug beanspruchten Volumens des Bohrerkörpers erzielbar ist. Dieser Effekt ist insbesondere dann von besonderem Vorteil, wenn das Bohrwerkzeug bzw. das Schneidteil des Bohrwerkzeugs aus einem Werkstoff hergestellt wird, der eine hohe Festigkeit aber gleichzeitig eine damit einhergehende höhere Sprödigkeit hat, wie dies bei Hartstoffen, wie zum Beispiel Vollhartmetall oder Cermet-Werkstoffen der Fall ist. Im Einzelnen ergeben sich folgende Effekte:
Durch den Querschnittskonturabschnitt BQ1, der sich in Umfangsrichtung mit einem verhältnismäßig kleinen Radius erstreckt, wird die Querschnittsfläche des Kühlkanals 16 vergrößert, ohne dadurch jedoch den Bohrerquerschnitt in spürbarer Weise zu schwächen. Denn im radial außenliegenden Bereich wirken sich kleine Krümmungsradien nur stark abgeschwächt auf den Spannungsverlauf aus. Über den konkaven Abschnitt wird die Wandstärke hinter der Hauptschneide vergrößert, was der Spannungsverteilung im Bohrerquerschnitt zugute kommt. Durch den sich an den konkaven Abschnitt KK anschließenden, radial innenliegenden Ausbauchungsabschnitt AKA wird sichergestellt, dass das Schmier-/Kühlmittel zu einem angehobenen Prozentsatz in Richtung Querschneide und Hauptschneide gelenkt werden kann, sodass die Kühlung des dort entstehenden Spans besonders effektiv erfolgen kann. Es hat sich gezeigt, dass es in erster Linie die Kühlung der Späne ist, welche die Schneiden vor thermischen Überbeanspruchungen schützt.

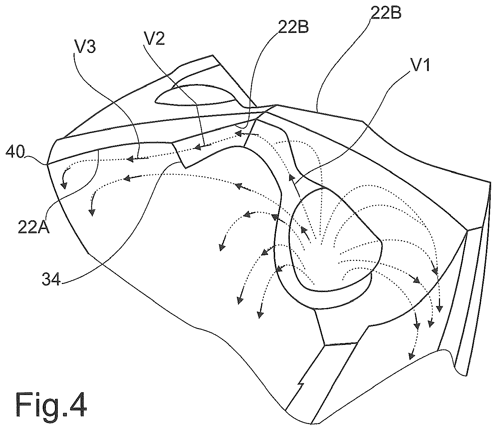

Die erfindungsgemäße Gestaltung der Kühlkanalquerschnitte hat insbesondere dann Vorteile, wenn ein Anschliff gemäß Fig. 3 und 4 verwendet wird. Fig. 3 zeigt eine Draufsicht auf ein erfindungsgemäßes Werkzeug mit einem sog. 4-Flächen-Anschliff, bei dem hinter der Hauptschneide 22 mit den Abschnitten 22A, der vom Schneideneck 40 ausgeht, und 22B einen erste und eine zweite Freifläche 24 und 26 liegt.

Mit dem Bezugszeichen 28 ist eine Ausspitzung bezeichnet, die in Fig. 3 schraffiert hinterlegt ist. Über die Ausspitzung entsteht der zentrumsnahe Bereich 22B der Hauptschneide. Dieser Bereich geht über einen Knickpunkt 30 in den radial außen liegenden Abschnitt 22A der Hauptschneide über.

Die mit 16 bezeichneten innenliegenden Kühlkanäle sind so angeordnet, dass sie teilweise in die Freifläche 26 und teilweise in eine Grundfläche der Ausspitzung 28 münden.

Mit dieser Ausgestaltung ergibt sich - wie der Fig. 4 entnommen werden kann - folgender Effekt:
Mit gepunkteten Linien sind die Stromfäden des aus dem Kühlkanal 16 austretenden Kühl-/Schmiermittels angedeutet. Die Länge der Pfeile gibt die jeweilige Geschwindigkeit an den betreffenden Positionen des Schneidteils des Werkzeugs wieder.

Man erkennt, dass durch die erfindungsgemäße Gestaltung der Kontur des Querschnitts der innenliegenden Kühlkanäle 16 die größten Strömungsgeschwindigkeiten dort sichergestellt werden, wo es auf die Kühlung des entstehenden Spans besonders ankommt.
Im Einzelnen ist aus der Fig. 4 ersichtlich, dass Strömungsmittel mit der Geschwindigkeit V1 zum Schneidenabschnitt 22B gleitet wird, was durch den Ausbauchungsabschnitt AKA der Querschnittskontur begünstigt wird. Die Geschwindigkeit V1 erhöht sich im Bereich einer Verschneidungskante 34 zwischen Ausspitzung und Bohrerkern zu der Geschwindigkeit V2, so dass in diesem Bereich eine besonders gute Kühlung erfolgt. Auch im Bereich der radial außen liegenden Hauptschneide 22A liegt die Geschwindigkeit V3 noch ausreichend hoch, um den dort entstehenden Span wirksam zur Kühlung des Werkzeugs heranzuziehen.

Die erfindungsgemäße Gestaltung des Kühlkanalquerschnitts ist also gerade dann besonders vorteilhaft, wenn ein damit ausgestattetes mehrschneidiges Bohrwerkzeug aus einem hochfesten Material hergestellt wird, wie zum Beispiel aus Vollhartmetall oder einem Cermet-Werkstoff, und wenn dieses Werkzeug zum Bohren ins Volle und insbesondere in Materialien eingesetzt wird, die eine besonders schwere Zerspanbarkeit haben.

## Patentansprüche

1. Mehrschneidiges Bohrwerkzeug mit innenliegenden Kühlkanälen und Spitzenanschliff mit Ausspitzung, bei dem eine Hauptschneidkante (22A) im Bereich des Bohrerkerns in einen Zentrumsschneidenabschnitt (22B) übergeht, wobei in jedem Bohrersteg ein bis zur Bohrerspitze geführter Kühlkanal (16) ausgebildet ist, **dadurch gekennzeichnet, dass** der Kühlkanal im Querschnitt des Bohrers betrachtet folgende Charakteristika hat:
a) er hat die Querschnittsform einer unsymmetrischen Niere, wobei
b) der in den Kühlkanalquerschnitt im Wesentlichen eingeschriebene größte Kreis (KE) überlappt mit der Mitte der Bohrerstege (14) und begrenzt die Kontur des Kühlkanalquerschnitts über einen Zentriwinkel (WZKE) im Bereich zwischen 80 und 90° in einem radial außenliegenden und der Drehrichtung (RS) abgewandten Bereich (KEZW) ;
c) radial außenliegend und in Schnittrichtung schließt sich an die vom eingeschriebenen Kreis (KE) festgelegte Begrenzungskurve (KEZW) im Wesentlichen in Umfangsrichtung ein Querschnittskonturabschnitt (BQ1) mit einem im Vergleich zum eingeschriebenen Kreis (KE) gleichsinnigen, aber erheblich kleineren Krümmungsradius (R1) an;
d) der kleinere Krümmungsradius (R1) des Querschnittskonturabschnitts BQ1 geht in eine konkave Kurve (KK) mit einem Krümmungsradius (R2) über, der um ein Vielfaches größer ist als die Krümmung des eingeschriebenen größten Kreises (KE);
e) an die konkave Kurve (KK) schließt sich radial innenliegend und außerhalb des eingeschriebenen größten Kreises (KE) ein erneut konvexer Kanal-Ausbauchungsabschnitt (AKA) mit einem Krümmungsradius (R3) an, der wesentlich größer ist als der kleine Krümmungsradius (R1) im Querschnittskonturabschnitt BQ1; und
f) die Krümmung der Querschnittsbegrenzung nimmt vom Ausbauchungsabschnitt (AKA) bis zum Bereich KEZW ständig zu.

2. Bohrwerkzeug nach Anspruch 1, **dadurch gekennzeichnet, dass** der in den Kühlkanalquerschnitt im Wesentlichen eingeschriebene größte Kreis (KE) i.W. mittig in den Bohrerstegen (14) liegt.

3. Bohrwerkzeug nach Anspruch 1 oder 2, **dadurch gekennzeichnet, dass** der in den Kühlkanalquerschnitt im Wesentlichen eingeschriebene größte Kreis (KE) die konkave Kurve (KK) an zwei Punkten (18, 20) schneidet.

4. Bohrwerkzeug nach einem der Ansprüche 1 bis 3, **dadurch gekennzeichnet, dass** sich der Kühlkanal im Bohrersteg (14) über einen Zentriwinkel (WZKK) zwischen 30 und 40° erstreckt.

5. Bohrwerkzeug nach einem der Ansprüche 1 bis 4, **dadurch gekennzeichnet, dass** sich der Kühlkanal im Bohrersteg (14) in radialer Richtung über einen Bereich (BR) erstreckt, der im Bereich zwischen 0,15 und 0,2xD liegt, wobei D dem Nenndurchmesser (DN) des Bohrwerkzeugs entspricht.

6. Bohrwerkzeug nach einem der Ansprüche 1 bis 5, **dadurch gekennzeichnet, dass** der Mittelpunkt () des größten eingeschriebenen Kreises (KE) auf einem Teilkreis mit einem Durchmesser (DTK) liegt, der im Bereich von 0,45 bis 0,55xD liegt, wobei D dem Nenndurchmesser (DN) des Bohrwerkzeugs entspricht.

7. Bohrwerkzeug nach einem der Ansprüche 1 bis 6, **dadurch gekennzeichnet, dass** der Durchmesser (DKE) des eingeschriebenen größten Kreises (KE) im Bereich zwischen 0,1 und 0,15xD liegt, wobei D dem Nenndurchmesser (DN) des Bohrwerkzeugs entspricht.

8. Bohrwerkzeug nach einem der Ansprüche 1 bis 7, **dadurch gekennzeichnet, dass** der kleinere Krümmungsradius (R1) des Querschnittskonturabschnitts BQ1 eine Wert hat, der im Wesentlichen dem 0,25-fachen des Durchmessers (DKE) des eingeschriebenen größten Kreises (KE) entspricht.

9. Bohrwerkzeug nach einem der Ansprüche 1 bis 8, **dadurch gekennzeichnet, dass** der Krümmungsradius (R2) der konkaven Kurve (KK) im Wesentlichen dem zweifachen Wert des Durchmessers (DKE) des eingeschriebenen größten Kreises (KE) entspricht.

10. Bohrwerkzeug nach einem der Ansprüche 1 bis 9, **dadurch gekennzeichnet, dass** der Krümmungsradius (R3) des konvexen Kanal-Ausbauchungsabschnitts (AKA) im Wesentlichen dem 1,5-Fachen des kleinen Krümmungsradius (R1) im Querschnittskonturabschnitt BQ1 entspricht.

11. Bohrwerkzeug nach einem der Ansprüche 1 bis 10, **dadurch gekennzeichnet, dass** die Hauptschneide (22A) ausgehend vom Schneideneck (40) zumindest abschnittsweise konkav ausgebildet ist.

12. Bohrwerkzeug nach einem der Ansprüche 1 bis 11, **dadurch gekennzeichnet, dass** die Hauptschneide im Übergangsbereich zum Zentrumsschneidenabschnitt (22B) einen Knickpunkt (30) hat.

13. Bohrwerkzeug nach einem der Ansprüche 1 bis 12, **dadurch gekennzeichnet, dass** der Kühlkanal (16) teilweise in eine Freifläche (26) und in eine Grundfläche der Ausspitzung (28) mündet.

14. Bohrwerkzeug nach einem der Ansprüche 1 bis 13, **gekennzeichnet durch** die Ausgestaltung als Werkzeug zum Bohren ins Volle.

## Claims

1. A multi-lip drilling tool with internal cooling ducts and point grinding with point thinning, in which a main cutting edge (22A) transitions into a central cutting edge section (22B) in the area of the drill core, wherein a cooling duct (16) guided to the drill bit is formed in each drill web, **characterized in that** the cooling duct has the following characteristics as viewed in the cross section of the drill:
a) it has the cross sectional form of an unsymmetrical kidney, wherein
b) the largest circle (KE) essentially inscribed in the cooling duct cross section overlaps with the center of the drill webs (14) and bounds the contour of the cooling duct cross section via a central angle (WZKE) in a range of between 80 and 90° in a radially external region (KEZW) facing away from the rotational direction (RS);
c) radially externally and in the cutting direction, the boundary curve (KEZW) defined by the inscribed circle (KE) is adjoined essentially in the circumferential direction by a cross sectional contour section (BQ1), whose radius of curvature (R1) has the same direction as, but is significantly smaller than, the inscribed circle (KE);
d) the smaller radius of curvature (R1) of the cross sectional contour section BQ1 transitions into a concave curve (KK) with a radius of curvature (R2) that is many times larger than the curvature of the inscribed largest circle (KE);
e) radially internally and outside the inscribed largest circle (KE), the concave curve (KK) is once again adjoined by a convex duct bulging section (AKA) with a radius of curvature (R3) that is significantly greater than the small radius of curvature (R1) in the cross sectional contour section (BQ1); and
f) the curvature of the cross sectional boundary continuously increases from the bulging section (AKA) to the region KEZW.

2. The drilling tool according to claim 1, **characterized in that** the largest circle (KE) essentially inscribed in the cooling duct cross section lies essentially in the center of the drill webs (14).

3. The drilling tool according to claim 1 or 2, **characterized in that** the largest circle (KE) essentially inscribed in the cooling duct cross section intersects the concave curve (KK) at two points (18, 20).

4. The drilling tool according to one of the claims 1 to 3, **characterized in that** the cooling duct in the drill web (14) extends over a central angle (WZKK) of between 30 and 40°.

5. The drilling tool according to one of the claims 1 to 4, **characterized in that** the cooling duct in the drill web (14) extends in a radial direction over an area (BR) ranging between 0.15 and 0.2xD, wherein D denotes the nominal diameter (DN) of the drilling tool.

6. The drilling tool according to one of the claims 1 to 5, **characterized in that** the central point of the largest inscribed circle (KE) lies on a semicircle having a diameter (DTK) ranging between 0.45 to 0.55xD, wherein D denotes the nominal diameter (DN) of the drilling tool.

7. The drilling tool according to one of the claims 1 to 6, **characterized in that** the diameter (DKE) of the inscribed largest circle (KE) ranges between 0.1 and 0.15×D, wherein D denotes the nominal diameter (DN) of the drilling tool.

8. The drilling tool according to one of the claims 1 to 7, **characterized in that** the smaller radius of curvature (R1) of the cross sectional contour section BQ1 has a value essentially corresponding to 0.25 times the diameter (DKE) of the inscribed largest circle (KE).

9. The drilling tool according to one of the claims 1 to 8, **characterized in that** the radius of curvature (R2) of the concave curve (KK) essentially corresponds to twice the value of the diameter (DKE) of the inscribed largest circle (KE).

10. The drilling tool according to one of the claims 1 to 9, **characterized in that** the radius of curvature (R3) of the convex duct bulging section (AKA) essentially corresponds to 1.5 times the smallest radius of curvature (R1) in the cross sectional contour section BQ1.

11. The drilling tool according to one of the claims 1 to 10, **characterized in that** at least sections of the main blade (22A) are concave in design extending from the cutting edge (40).

12. The drilling tool according to one of the claims 1 to 11, **characterized in that** the main blade has an inflection point (30) in the area of transition to the central blade section (22B).

13. The drilling tool according to one of the claims 1 to 12, **characterized in that** the cooling duct (16) empties partially into the free surface (26) and into a base of the point thinning (28).

14. The drilling tool according to one of the claims 1 to 13, **characterized by** a configuration as a tool for drilling into solid materials.

## Revendications

1. Outil de perçage multi-taillant avec des conduits de refroidissement intérieurs et un affûtage en pointe avec amincissement, dans lequel une arête de taillant principal (22A) dans la zone de l'âme de foret se transforme en une section de taillant de centre (22B), dans lequel un conduit de refroidissement (16) guidé jusqu'à la pointe de foret est réalisé dans chaque nervure de foret, **caractérisé en ce que** le conduit de refroidissement a les caractéristiques suivantes lorsqu'il est observé dans la section transversale du foret :
a) il a la forme de section transversale d'un rein asymétrique, dans lequel
b) le cercle le plus grand (KE) sensiblement inscrit dans la section transversale de conduit de refroidissement chevauche le milieu des nervures de foret (14) et délimite le contour de la section transversale de conduit de refroidissement sur un angle de de centre (WZKE) dans la plage entre 80 et 90° dans une zone (KEZW) radialement extérieure et opposée au sens de rotation (RS) ;
c) radialement à l'extérieur et dans la direction de coupe, une section de contour de section transversale (BQ1) avec un rayon de courbure (R1) de même sens que le cercle inscrit (KE), mais sensiblement plus petit, se raccorde à la courbe de délimitation (KEZW) fixée par le cercle inscrit (KE) ;
d) le plus petit rayon de courbure (R1) de la section de contour de section transversale BQ1 se transforme en une courbe concave (KK) avec un rayon de courbure (R2) qui est supérieur un multiple de fois à la courbure du cercle le plus grand inscrit (KE) ;
e) une section de renflement de conduit (AKA) à nouveau convexe avec un rayon de courbure (R3), qui est sensiblement supérieur au petit rayon de courbure (R1) dans la section de contour de section transversale BQ1, se raccorde radialement à l'intérieur et à l'extérieur du cercle le plus grand inscrit (KE), au niveau de la courbure concave (KK) ; et
f) la courbure de la délimitation de section transversale augmente continuellement depuis la section de renflement (AKA) jusqu'à la zone KEZW.

2. Outil de perçage selon la revendication 1, **caractérisé en ce que** le cercle le plus grand (KE) sensiblement inscrit dans la section transversale de conduit de refroidissement se trouve sensiblement au milieu dans les nervures de foret (14).

3. Outil de perçage selon la revendication 1 ou 2, **caractérisé en ce que** le cercle le plus grand (KE) sensiblement inscrit dans la section transversale de conduit de refroidissement coupe la courbe concave (KK) en deux points (18, 20).

4. Outil de perçage selon l'une quelconque des revendications 1 à 3, **caractérisé en ce que** le conduit de refroidissement s'étend dans la nervure de foret (14) sur un angle de centre (WZKK) entre 30 et 40°.

5. Outil de perçage selon l'une quelconque des revendications 1 à 4, **caractérisé en ce que** le conduit de refroidissement dans la nervure de foret (14) s'étend dans la direction radiale sur une zone (BR), qui se trouve dans la plage entre 0,15 et 0,2xD, dans lequel D correspond au diamètre nominal (DN) de l'outil de perçage.

6. Outil de perçage selon l'une quelconque des revendications 1 à 5, **caractérisé en ce que** le point médian () du cercle le plus grand inscrit (KE) se trouve sur un cercle primitif avec un diamètre (DTK), qui se trouve dans la plage de 0,45 à 0,55xD, dans lequel D correspond au diamètre nominal (DN) de l'outil de perçage.

7. Outil de perçage selon l'une quelconque des revendications 1 à 6, **caractérisé en ce que** le diamètre (DKE) du cercle le plus grand inscrit (KE) se trouve dans la plage entre 0,1 et 0,15xD, dans lequel D correspond au diamètre nominal (DN) de l'outil de perçage.

8. Outil de perçage selon l'une quelconque des revendications 1 à 7, **caractérisé en ce que** le rayon de courbure le plus petit (R1) de la section de contour de section transversale BQ1 a une valeur qui correspond sensiblement à 0,25 fois le diamètre (DKE) du cercle le plus grand inscrit (KE).

9. Outil de perçage selon l'une quelconque des revendications 1 à 8, **caractérisé en ce que** le rayon de courbure (R2) de la courbe concave (KK) correspond sensiblement à deux fois la valeur du diamètre (DKE) du cercle le plus grand inscrit (KE).

10. Outil de perçage selon l'une quelconque des revendications 1 à 9, **caractérisé en ce que** le rayon de courbure (R3) de la section de renflement de conduit convexe (AKA) correspond sensiblement à 1,5 fois le petit rayon de courbure (R1) dans la section de contour de section transversale BQ1.

11. Outil de perçage selon l'une quelconque des revendications 1 à 10, **caractérisé en ce que** le taillant principal (22A) est réalisé concave au moins par section en partant du coin de taillant (40).

12. Outil de perçage selon l'une quelconque des revendications 1 à 11, **caractérisé en ce que** le taillant principal a dans la zone de transition vers la section de taillant de centre (22B), un point d'inflexion (30).

13. Outil de perçage selon l'une quelconque des revendications 1 à 12, **caractérisé en ce que** le conduit de refroidissement (16) débouche en partie dans une surface libre (26) et dans une surface de base de l'amincissement (28).

14. Outil de perçage selon l'une quelconque des revendications 1 à 13, **caractérisé par** la configuration en tant qu'outil pour le perçage dans le plein.
